# FASCICULE DE BREVET EUROPEEN

(11) **EP 2 818 408 B1**
(45) Date de publication et mention de la délivrance du brevet: **07.12.2016**
(21) Numéro de dépôt: 14002117.1
(22) Date de dépôt: 19.06.2014
(51) Int. Cl.: B64C 27/473

(54) **Pale à rigidité en torsion réduite et rotor muni d'une telle pale**
Rotorblatt mit verminderter Torsionssteifigkeit, und mit diesem Blatt ausgestatteter Rotor
Blade with reduced torsional rigidity and rotor provided with such a blade

(30) Priorité: 26.06.2013 FR 1301500
(43) Date de publication de la demande: 31.12.2014
(73) Titulaire: Airbus Helicopters, 13725 Marignane Cedex (FR)
(72) Inventeur: Bianchi, Laurent, F-13012 Marseille (FR); Reveillon, Damien, F-37420 Avoine (FR)
(74) Mandataire: GPI & Associés

(56) Documents cités:
- EP-A1- 2 363 342
- EP-A1- 2 540 620
- DE-B- 1 260 985
- US-A- 4 095 322
- US-A1- 2004 169 108
- US-A1- 2012 020 801

## Description

La présente invention concerne une pale à rigidité en torsion réduite destinée à un rotor ainsi qu'un rotor muni d'une telle pale. Cette pale est plus particulièrement destinée à une hélice d'un aéronef ou encore à un rotor arrière d'un aéronef à voilure tournante.

Classiquement, une pale s'étend longitudinalement selon son envergure d'une première extrémité destinée à être fixée à un moyeu tournant d'un rotor vers une deuxième extrémité dite extrémité libre. Par rapport au rotor, on comprend que la pale s'étend radialement de la première extrémité vers la deuxième extrémité.

Le document US 4 095 322 montre un exemple selon l'état de la technique.

On remarque que le terme « longitudinal » se comprend comme au sens de l'envergure d'une pale.

De plus, cette pale s'étend transversalement d'un bord d'attaque vers un bord de fuite de la pale, selon la corde de cette pale. La pale comprend notamment un revêtement extérieur muni d'une première peau au niveau de son extrados dénommée par commodité « peau d'extrados », et d'une seconde peau au niveau de son intrados dénommée par commodité « peau d'intrados ».

Chaque pale d'un rotor, par exemple un rotor de sustentation d'un aéronef à voilure tournante, exerce une portance durant le mouvement rotatif de ce rotor permettant de sustenter l'aéronef, voire de le propulser. En fonction de l'angle de pas de chaque pale du rotor, la portance développée par le rotor est plus ou moins importante. L'angle d'incidence aérodynamique (angle entre la corde du profil et l'écoulement d'air) de chaque profil aérodynamique de la pale, dénommé « profil » par commodité, d'une section normale à l'axe de variation de pas de la pale correspond à une constante près dite « calage » du profil à l'angle de pas de la pale. Cet axe de variation de pas définit généralement l'axe longitudinal de la pale.

Dans ces conditions, on observe à partir d'un angle d'incidence seuil d'un profil donné, c'est-à-dire d'une section transversale de la pale, un décollement des filets d'air notamment au niveau du bord d'attaque ou bien du bord de fuite de ce profil. Ce décollement peut provoquer un décrochage aérodynamique de la pale, voire une chute brutale de sa portance si ce phénomène se propage et demeure sur une zone comprise ente deux profils délimitant une surface critique selon l'envergure de la pale. De plus, le décollement des filets d'air génère des tourbillons qui sont à l'origine d'une augmentation du coefficient de traînée de la pale et de vibrations.

Pour limiter les décollements, une solution consiste de permettre à la pale de se vriller géométriquement sur elle-même.

Il est à noter que le vrillage géométrique d'une pale peut se définir par l'angle formé entre la corde de chaque profil d'une section de la pale avec un plan de référence de cette pale.

Pratiquement, on peut vriller chaque profil de la pale par rapport à l'axe de variation de pas de cette pale d'un angle repéré par rapport à un tel plan de référence.

Pour une trajectoire de pale donnée, on comprend que le vrillage influe directement sur l'incidence aérodynamique de chaque profil. Dans ces conditions, on appelle « loi de vrillage » l'évolution selon l'envergure de la pale des angles de vrillage obtenus par construction. La loi de vrillage d'une pale est immuable. Cette loi de vrillage résulte d'un compromis admis pour satisfaire le fonctionnement optimal du rotor sur l'ensemble du domaine de vol.

Cette loi de vrillage s'applique de la première extrémité à la deuxième extrémité de la pale selon un axe dit « axe de vrillage » ou encore selon une courbe prédéfinie. Bien évidemment, la pale est susceptible de se déformer sous l'effet des forces appliquées.

Aujourd'hui, pour concevoir les pales d'un rotor d'un aéronef à voilure tournante, on dimensionne ses principaux éléments structurels, qui sont généralement des longerons, un revêtement extérieur et des nervures éventuelles, afin d'atteindre les performances requises, telles que par exemple la masse décollable de l'aéronef ou bien la résistance aux efforts centrifuges des pales.

De plus, un matériau de remplissage, généralement une mousse, est inséré dans les espaces libres entre ces éléments structurels. Ce matériau de remplissage permet d'apporter une rigidité en compression vis-à-vis du flux d'air appliqué sur le revêtement de la pale et rigidifie également la pale en torsion principalement selon son envergure.

Par exemple, le document FR2616409 présente une pale en matériaux composites comportant un longeron longitudinal selon l'axe longitudinal de la pale. Ce longeron est positionné sensiblement au centre de la pale, la pale comportant alors deux caissons positionnés entre ce longeron et respectivement le bord d'attaque de la pale et le bord de fuite de la pale. De plus, ce longeron peut être constitué par deux éléments, un caisson supplémentaire se situant entre ces deux éléments. Chaque caisson pouvant être rempli de mousse, cette pale dispose d'une résistance mécanique importante, y compris au niveau de la rigidité en torsion autour de l'axe longitudinal de la pale.

On note que le document FR2617119 décrit une pale en matériaux composites comportant un noyau structurel, de profil aérodynamique approximatif et assurant seul la résistance structurelle de la pale, ainsi qu'un revêtement d'habillage formant le profil aérodynamique souhaité et constitué par une peau d'intrados et une peau d'extrados. Un même noyau structurel peut ainsi être associé à différents revêtements d'habillage, c'est-à-dire différents profils aérodynamiques, une couche d'un matériau de conformation comblant l'espace entre le noyau structurel et le revêtement d'habillage. Ainsi, une telle pale constituée à partir de différents profils aérodynamiques distribués selon l'envergure de la pale a le même noyau structurel et, par suite, les mêmes caractéristiques mécaniques quelles que soient les sections structurelles formées à partir de ces profils. Le noyau structurel comporte au moins un longeron longitudinal, positionné par exemple au niveau du bord d'attaque et/ou au centre de la pale, une coque rigide et un matériau de remplissage.

Le document EP0764764 a pour objet une pale comportant des longerons positionnés aussi bien de façon longitudinale que transversale entre une peau d'intrados et une peau d'extrados de la pale, les espaces entre les longerons étant remplis de mousse. La rigidité de la pale obtenue par l'utilisation de ces longerons permet à la pale de rester fonctionnelle après des impacts locaux affectant la pale et détruisant notamment certaines zones entre ces longerons. Une telle pale comportant des longerons positionnés de façons longitudinale et transversale a une rigidité très importante pour pouvoir rester fonctionnelle après ces impacts.

Généralement, lors du développement d'une pale, la majorité des caractéristiques mécaniques recherchées pour l'efficacité de cette pale, telles que sa tenue au cisaillement (efforts tranchants et moment de torsion), sa rigidité longitudinale au sens de la flexion, sa tenue en fatigue ou encore sa masse, sont conformes aux attentes.

L'optimisation de la rigidité en torsion autour d'un axe longitudinal d'une pale est une étape de conception nécessitant une attention très particulière. En effet, si la pale manque de rigidité en torsion autour de cet axe longitudinal, elle est trop souple et, par suite, se déforme et se vrille trop sous l'effet des forces aérodynamiques. Ses performances aérodynamiques sont alors fortement dégradées. A contrario, si la pale est trop rigide en torsion autour de cet axe longitudinal, elle ne se déforme pas et ne se vrille pas sous l'effet des forces aérodynamiques, mais des vibrations importantes peuvent apparaître ainsi qu'un décollement des filets d'air notamment au niveau du bord d'attaque ou bien du bord de fuite de la pale qui peut aboutir à un décrochage aérodynamique de la pale.

Il est possible de compenser partiellement cette rigidité en torsion de la pale en modifiant de manière active le vrillage de la pale, c'est-à-dire au cours du vol de l'aéronef. Par exemple, au moins un volet mobile peut être ajouté localement dans le prolongement du bord de fuite de la pale pour provoquer ce vrillage actif sous l'effet des forces aérodynamiques. Des fibres piézoélectriques peuvent également être intégrées dans la peau d'extrados et/ou la peau d'intrados de la pale ou bien les peaux de l'extrados et l'intrados de la pale peuvent être réalisées au moins localement en matériaux composites anisotropes. De telles pales sont généralement dénommées « pales à vrillage actif », par opposition aux pales traditionnelles dont le vrillage est obtenu par construction et figé.

On constate que de telles techniques visant à vriller activement une pale sont complexes, tant dans leur fabrication que leur pilotage. De plus, ces techniques mettent en oeuvre des organes dédiés à ce vrillage actif, tels que des actionneurs ou bien des volets qui augmentent significativement la masse de la pale, ce qui n'est pas souhaitable dans le cas d'une voilure tournante d'un aéronef.

Par ailleurs, le document FR2956856 décrit une « pale à vrillage adaptatif » comportant une lame constituée par un empilement de plis composites unidirectionnels antisymétriques par rapport à un pli médian, cet empilement de plis composites unidirectionnels étant muni d'un nombre de plis variables le long de l'envergure de la pale. Un premier et un second moyens de fixation fixent cette lame respectivement à la peau d'intrados et la peau d'extrados du revêtement extérieur. Chaque moyen de fixation s'étend dans la cavité selon une direction longitudinale parallèle à l'envergure de la pale. Cette pale à vrillage adaptatif peut alors se vriller en cours de vol consécutivement au vrillage de la lame sous l'effet de forces centrifuges. On peut alors parler d'« adaptation au vrillage » de la pale, c'est-à-dire sa capacité à permettre le vrillage de la pale au cours du vol sans l'utilisation de moyens de vrillage actif.

Il est également possible de modifier la conception d'une pale afin de corriger sa rigidité en torsion. Cependant, deux difficultés majeures s'opposent à de telles modifications.

Tout d'abord, il n'est pas simple de modifier cette rigidité en torsion sans impacter les autres caractéristiques mécaniques de la pale qui sont essentielles à son bon fonctionnement. En effet, toute modification élémentaire de la pale, ayant pour but de diminuer ou bien d'augmenter sa rigidité en torsion, a pour effet de modifier d'autres caractéristiques mécaniques et massiques de la pale. Par exemple, on peut modifier les épaisseurs du revêtement de la pale ainsi que sa composition ou bien changer le matériau de remplissage pour modifier la rigidité en torsion de la pale, mais cette modification impacte par exemple la rigidité longitudinale de la pale. Une telle modification pour corriger la rigidité en torsion de la pale revient alors à refaire le plus souvent un développement d'une nouvelle pale.

Ensuite, cette rigidité en torsion défavorable au bon fonctionnement de la pale est constatée généralement lors d'essais en rotation sur un banc d'essais, voire d'essais en vol d'un prototype, c'est-à-dire lorsque le développement de la pale est bien avancé. Ainsi modifier la rigidité en torsion d'une pale a alors un effet négatif très important sur ce développement de la pale, augmentant aussi bien son coût de développement que la durée d'étude.

La présente invention a alors pour objet de proposer une pale permettant de s'affranchir des limitations mentionnées ci-dessus, notamment en découplant la rigidité de torsion de la pale de ses autres caractéristiques mécaniques, pour obtenir une rigidité de torsion réduite de la pale autour de son axe longitudinal, sans modifier significativement ses autres caractéristiques mécaniques.

Selon l'invention, une pale à rigidité en torsion réduite selon la revendication 1. destinée à un rotor comporte un revêtement extérieur s'étendant selon l'envergure de la pale d'une première zone extrémale à une seconde zone extrémale ainsi qu'un moyen structurel.

La première zone extrémale se situe à proximité de la première extrémité de la pale qui est apte à être fixée à un moyeu du rotor, alors que la seconde zone extrémale se situe au niveau de la deuxième extrémité libre de la pale.

Cette pale à rigidité en torsion réduite est notamment destinée à une pale d'hélice d'aéronef ou encore à un rotor d'un aéronef à voilure tournante, en particulier un rotor arrière.

Cette pale à rigidité en torsion réduite est particulièrement adaptée, selon un premier mode de réalisation de l'invention, à une pale à vrillage adaptatif telle que décrite dans le document FR2956856. Le vrillage d'une telle pale à vrillage adaptatif à rigidité en torsion réduite est d'une part obtenu par construction et d'autre part modifié au cours du vol de l'aéronef.

Cette pale à rigidité en torsion réduite peut cependant être adaptée, selon un second mode de réalisation de l'invention, à une pale traditionnelle, c'est-à-dire répondant à une loi de vrillage et dont le vrillage est obtenu par construction et figé.

Quel que soit le mode de réalisation de l'invention, le revêtement extérieur de cette pale comporte une peau d'extrados et une peau d'intrados qui peuvent constituer conjointement une seule et même peau ou bien deux peaux distinctes. Ce revêtement extérieur délimite une cavité située entre la peau d'extrados et la peau d'intrados.

Le moyen structurel de la pale s'étend notamment à l'intérieur de la cavité de la pale et relie la pale à un moyeu du rotor. De plus, un matériau de remplissage, généralement une mousse, est inséré dans cette cavité.

Cette pale à rigidité en torsion réduite est remarquable en ce que le matériau de remplissage comporte au moins une séparation parallèlement à une corde de la pale. De fait, au moins deux blocs indépendants en matériau de remplissage remplissent la cavité.

En effet, le moyen structurel et le revêtement extérieur définissent essentiellement les caractéristiques mécaniques de cette pale. De plus, le matériau de remplissage inséré dans la cavité de la pale permet de stabiliser le revêtement extérieur en apportant une rigidité en compression vis-à-vis du flux d'air appliqué sur ledit revêtement extérieur. Par contre, ce matériau de remplissage apporte également une rigidité en torsion de la pale autour de son axe longitudinal.

Cette rigidité en torsion peut être défavorable au bon fonctionnement et aux bonnes performances aérodynamiques de la pale.

Selon le premier mode de réalisation de l'invention, c'est-à-dire pour une pale à vrillage adaptatif, cette rigidité en torsion, bien que nécessaire, peut s'opposer au vrillage de la pale en cours de vol et ainsi être préjudiciable aux bonnes performances aérodynamiques de cette pale à vrillage adaptatif.

En effet, le matériau de remplissage inséré dans la cavité de la pale à vrillage adaptatif apporte de la rigidité en torsion à la pale et permet au revêtement extérieur et au moyen structurel de se déformer à peu près de façon similaire lors du vrillage de la pale.

De la sorte, la présence du matériau de remplissage favorise le contrôle de ce vrillage, la liaison directe réalisée entre les déformations du revêtement extérieur et du moyen structurel permettant ainsi de mieux transmettre un couple de torsion entre le moyen structurel et le revêtement extérieur. On peut en déduire que la rigidité en torsion de la pale est nécessaire pour le contrôle du vrillage.

Cependant si cette rigidité est trop importante, elle peut s'opposer à toute déformation de la pale et devenir alors un frein à ce vrillage.

La présence d'une ou de plusieurs séparations transversales dans le matériau de remplissage de la pale selon ce premier mode de réalisation de l'invention permet donc, de façon inattendue, de réduire la rigidité en torsion de la pale autour de son axe longitudinal et tend alors à favoriser l'adaptation au vrillage de cette pale, cet axe longitudinal de la pale pouvant être sensiblement confondu avec son axe de vrillage.

Avantageusement, cette réduction de la rigidité en torsion de la pale selon l'invention permet ainsi, dans ce premier mode de réalisation, de conserver cette notion de contrôle du vrillage de la pale tout en réduisant l'effet de frein à ce vrillage.

Avantageusement, le matériau de remplissage n'étant pas un élément structurel de la pale, les caractéristiques mécaniques principales de la pale, hormis la rigidité en torsion, ne sont pas modifiées par la présence de ces séparations. Ainsi, une pale à rigidité en torsion réduite selon l'invention permet, sans modifier les caractéristiques mécaniques principales de la pale, de garder les avantages de ce matériau de remplissage remplissant la cavité de la pale, tels que la rigidité en compression par exemple, tout en minimisant ses inconvénients, tels que l'augmentation de la rigidité en torsion.

De fait, selon l'invention, le vrillage de la pale au cours du vol se trouve favorisé par la présence d'une ou plusieurs séparations. De préférence, la pale comporte dans ce cas une multitude de séparations afin de diminuer de façon importante la rigidité en torsion de la pale autour de son axe longitudinal qui est généralement sensiblement confondu avec son axe de vrillage.

Selon ce premier mode de réalisation de l'invention, le moyen structurel de la pale à vrillage adaptatif à rigidité en torsion réduite comporte une lame s'étendant à l'intérieur de la cavité selon l'envergure de la pale. Cette lame comporte un matériau composite anisotrope pour être apte à se vriller sous l'effet de forces centrifuges F lorsque la pale est en rotation. Cette lame est fixée au revêtement extérieur par un premier moyen de fixation et un second moyen de fixation pour pouvoir vriller le revêtement extérieur. De plus, cette lame relie la pale au moyeu du rotor.

La lame de cette pale peut comporter un empilement de plis composites unidirectionnels antisymétriques par rapport à un pli médian, cet empilement de plis composites unidirectionnels étant muni d'un nombre de plis variables le long de l'envergure de la pale.

Cette lame peut également comporter une zone avant à proximité du bord d'attaque de la pale et une zone arrière à proximité du bord de fuite de la pale. Le premier moyen de fixation fixe la zone avant à l'une des peaux d'intrados et d'extrados du revêtement extérieur et le second moyen de fixation fixe la zone arrière à l'autre peau du revêtement extérieur à laquelle n'est pas fixée la zone avant. Ainsi, chaque peau d'intrados ou d'extrados est respectivement fixée à un seul moyen de fixation. Le premier moyen de fixation s'étend dans la cavité selon une première direction longitudinale *D1* parallèle à l'envergure de la pale et le second moyen de fixation s'étend dans la cavité selon une seconde direction longitudinale D2 parallèle à l'envergure.

Enfin, cette pale peut comporter au moins un longeron longitudinal, chaque longeron liant alors la peau d'intrados et la peau d'extrados du revêtement extérieur. Par exemple, un tel longeron peut être positionné au niveau du bord d'attaque de la pale ou à proximité.

Selon le second mode de réalisation de l'invention, c'est-à-dire pour une pale traditionnelle, la rigidité en torsion de la pale peut être principalement à l'origine de l'apparition de vibrations importantes au niveau de la pale et du rotor.

Les effets inattendus de la présence d'une ou plusieurs séparations transversales dans le matériau de remplissage d'une pale selon l'invention peuvent être transposés au cas d'une pale traditionnelle.

De fait, la présence de telles séparations transversales dans le matériau de remplissage de la cavité d'une telle pale traditionnelle permet de réduire sa rigidité en torsion autour de son axe longitudinal. Par suite, cette réduction de rigidité en torsion a pour effet de limiter l'apparition des vibrations au niveau d'une telle pale traditionnelle. En conséquence, le fonctionnement de cette pale est ainsi amélioré par la présence de ces séparations.

Selon le second mode de réalisation de l'invention le moyen structurel de la pale traditionnelle à rigidité en torsion réduite comporte au moins un longeron longitudinal. Chaque longeron s'étend à l'intérieur de la cavité de la pale selon l'envergure de la pale et lie la peau d'extrados et la peau d'intrados du revêtement extérieur. Un tel longeron longitudinal relie la pale au moyeu du rotor.

Par exemple, un premier longeron s'étend au niveau du bord d'attaque de la pale et relie la pale au moyeu du rotor, un second longeron pouvant s'étendre dans la cavité de la pale, parallèlement au premier longeron ou encore sous la forme d'un arêtier de bord de fuite.

Le moyen structurel d'une pale selon l'invention peut également comporter au moins une nervure transversale. Chaque nervure transversale s'étend à l'intérieur de la cavité selon la corde de la pale, c'est-à-dire généralement perpendiculaire à l'envergure de la pale. Chaque nervure transversale lie généralement la peau d'extrados et la peau d'intrados du revêtement extérieur.

De plus, le nombre de séparations dans le matériau de remplissage de la pale a un effet direct sur la rigidité en torsion de la pale. Plus ce nombre de séparations est important, plus la réduction de la rigidité en torsion de la pale est importante. Par exemple, quelques séparations permettent d'avoir une légère diminution de cette rigidité en torsion notamment dans le cas d'une pale traditionnelle. En outre, on peut obtenir une réduction importante de la rigidité en torsion de la pale en réalisant une multitude de séparations afin, par exemple dans le cas d'une pale à vrillage adaptatif, de favoriser l'adaptation au vrillage de cette pale au cours du vol.

De même, la position de ces séparations, selon l'envergure de la pale, a également un effet important sur la rigidité en torsion de la pale. Ainsi, plus le matériau de remplissage comporte de séparations dans une zone de la pale suivant son envergure, plus la rigidité en torsion de cette zone de la pale est réduite. Avantageusement, dans le cas où l'on souhaite que la pale vrille de façon différente suivant les zones de la pale en envergure, chaque zone peut comporter des nombres différents de séparations. Par suite, la longueur en envergure des blocs en matériau de remplissage peut être différente tout au long de la pale. Ainsi, la rigidité en torsion de la pale n'est pas fixe, mais varie suivant les zones en envergure de la pale.

Il est également possible, pour obtenir des rigidités en torsion différentes suivant les zones de la pale en envergure, d'utiliser des matériaux de remplissage de caractéristiques différentes, deux blocs de ces matériaux de remplissage étant séparés par une séparation suivant l'invention. Par exemple, ce matériau de remplissage étant de la mousse, une mousse rigide et dense est utilisée en pied de pale pour obtenir une rigidité en torsion importante, cette mousse étant plus souple et moins dense jusqu'à l'extrémité libre de la pale.

De plus, l'ajout de ces séparations, qui revient à trancher le matériau de remplissage présent dans la cavité de la pale, ainsi que le choix de leur nombre et de leurs positions permet de disposer d'une marge de variation sur la rigidité en torsion de la pale selon son axe longitudinal. Avantageusement, cette marge de variation sur la rigidité en torsion de la pale peut permettre au concepteur de la pale une plus grande souplesse dans le choix de l'architecture de la pale, tout en limitant les risques sur ce choix. En effet, cette marge sur la rigidité en torsion de la pale peut être applicable même en fin de développement sans impacter les autres caractéristiques mécaniques de la pale.

En outre, quel que soit le mode de réalisation, des moyens de vrillage actif peuvent être ajoutés à de telles pales selon l'invention afin de modifier de manière active le vrillage de la pale, c'est-à-dire au cours du vol de l'aéronef. Le vrillage actif d'une telle pale est alors favorisé par la présence de séparations dans son matériau de remplissage. Par exemple, ces moyens de vrillage actif peuvent être un ou plusieurs volets mobiles ajoutés localement dans le prolongement du bord de fuite de la pale ou bien des fibres piézoélectriques intégrées dans la peau d'extrados et/ou la peau d'intrados de la pale.

Par ailleurs, indépendamment de ces modes de réalisation de l'invention, des micro-déplacements peuvent se produire entre deux blocs en matériau de remplissage adjacents, au niveau de chaque séparation. Par suite, afin que ces blocs en matériau de remplissage ne s'usent pas suite aux frottements consécutifs à ces micro-déplacements, une interface à base de matériau à faible coefficient de frottement ou de matériau anti-adhérant, tel que du téflon^{®}, est insérée au niveau de chaque séparation.

Cette interface est constituée par une bande insérée dans chaque séparation afin de séparer deux blocs adjacents. Cette bande est fixée à un bloc, par exemple par collage.

Cette interface peut également être constituée par deux bandes insérées dans chaque séparation afin de séparer deux blocs adjacents, une bande étant fixée respectivement sur chacun de ces deux blocs adjacents.

Cette bande est de préférence de faible épaisseur.

Outre une pale, l'invention a aussi pour objet un rotor d'aéronef, ce rotor étant muni d'un moyeu et d'une pluralité de pales, chaque pale étant une pale à rigidité en torsion réduite telle que décrite précédemment.

Ce rotor peut constituer une hélice d'un aéronef ou bien un rotor d'un aéronef à voilure tournante, en particulier un rotor arrière de cet aéronef à voilure tournante.

L'invention et ses avantages apparaîtront avec plus de détails dans le cadre de la description qui suit avec des exemples de réalisation donnés à titre illustratif en référence aux figures annexées qui représentent :
- la figure 1, une vue d'un premier mode de réalisation d'une pale selon l'invention,
- la figure 2, un schéma illustrant ce premier mode de réalisation,
- la figure 3, une coupe d'une pale selon ce premier mode de réalisation,
- la figure 4, une coupe d'une variante de ce premier mode de réalisation,
- la figure 5, une vue d'un second mode de réalisation d'une pale selon l'invention,
- la figure 6, un schéma illustrant ce second mode de réalisation, et
- la figure 7, une coupe d'une pale selon ce second mode de réalisation.

Les éléments présents dans plusieurs figures distinctes sont affectés d'une seule et même référence.

On note que trois directions X, Y et Z orthogonales les unes par rapport aux autres sont représentées sur les figures.

La direction X est dite transversale. Le terme « largeur » est relatif à une dimension transversale de la pale selon cette direction transversale X.

Une autre direction Y est dite direction de référence dans la mesure où la pale s'étend selon cette direction Y. Les directions dites longitudinales sont parallèles à cette direction de référence.

Enfin, une troisième direction Z est dite d'élévation et correspond aux dimensions en hauteur des structures décrites. Le terme « épaisseur » est alors relatif à une dimension en élévation selon cette direction d'élévation.

D'une manière commune aux deux modes de réalisation de l'invention, une pale 1 s'étend d'une première extrémité 1' fixée à un moyeu 110 d'un rotor 100 d'un aéronef, vers une deuxième extrémité 1" libre.

Cette pale 1 comporte un revêtement extérieur 2 s'étendant d'une première zone extrémale 3 à proximité de la première extrémité 1' de la pale 1 vers une seconde zone extrémale 4 au niveau de la deuxième extrémité 1" de la pale 1. Ce revêtement extérieur 2 est pourvu d'une peau d'extrados 2' et d'une peau d'intrados 2" qui délimitent conjointement une cavité 8 à l'intérieur du revêtement extérieur 2. Le revêtement extérieur 2 est donc au moins partiellement creux.

La pale 1 comporte un premier longeron 61 s'étendant à l'intérieur de la cavité 8 selon une direction longitudinale de référence Y parallèle à l'axe de variation de pas AY et positionné au niveau du bord d'attaque 20 de la pale 1, entre la peau d'extrados 2' et la peau d'intrados 2". Un matériau de remplissage, tel qu'une mousse, est agencé à l'intérieur de la cavité 8.

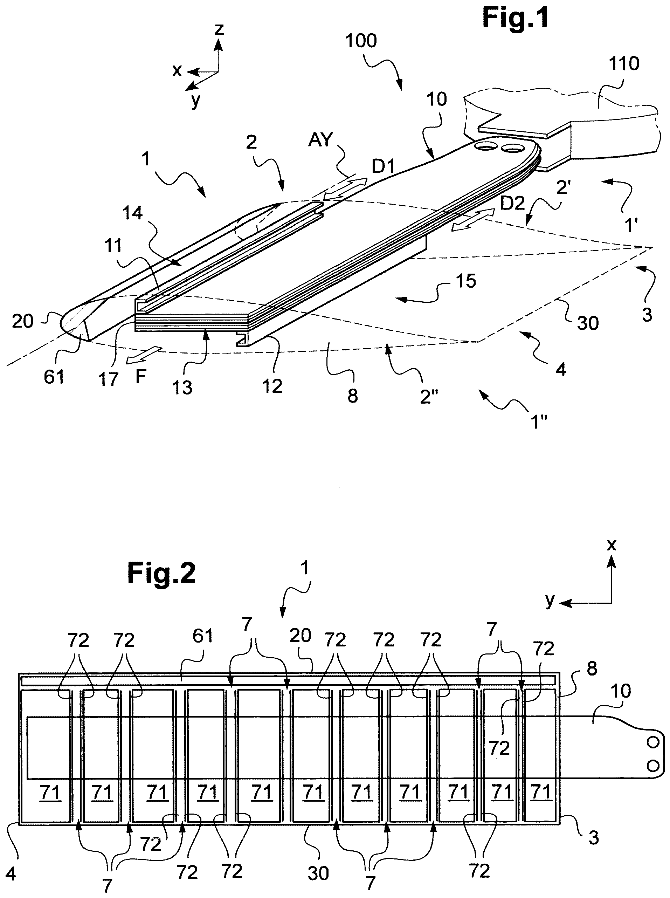

Spécifiquement au premier mode de réalisation de l'invention et selon la figure 1, le premier longeron 61 est limité entre la première zone extrémale 3 et la seconde zone extrémale 4 du revêtement extérieur 2. La section transversale de ce premier longeron 61 est minimisée, sa fonction principale n'étant pas structurelle, mais consistant essentiellement à protéger la pale 1 contre les impacts.

Le moyen structurel de cette pale 1 comporte une lame 10 s'étendant dans la cavité 8 selon une direction longitudinale Y allant de la deuxième zone extrémale 4 vers la première zone extrémale 3. De plus, cette lame 10 saille de la première zone extrémale 3 du revêtement extérieur 2 pour être fixée au moyeu 110. On note qu'un manchon peut être agencé entre la lame 10 et le moyeu 110 ou bien la lame 10 peut être reliée à une manchette intégrée à la pale 1 et prolongeant le revêtement extérieur 2 pour être fixée au moyeu 110.

Par ailleurs, la lame 10 est reliée au revêtement extérieur 2 par un premier moyen de fixation 11 et par un second moyen de fixation 12. Le second moyen de fixation 12 est décalé par rapport au premier moyen de fixation 11 selon la corde de la pale 1.

De plus, on note que le premier moyen de fixation 11 s'étend dans la cavité 8 selon une première direction longitudinale *D1* parallèle à l'axe de variation de pas AY, le second moyen de fixation 12 s'étendant dans la cavité 8 selon une seconde direction longitudinale D2 parallèle à l'axe de variation de pas AY.

Comme représenté sur la figure 1, le premier moyen de fixation 11 comprend un unique profilé continu, en forme de U par exemple. De même, le second moyen de fixation 12 comprend un unique profilé continu. Cependant, selon une première variante de ce premier mode de réalisation, le premier et le second moyen de fixation 11,12 peuvent comporter une pluralité de profilés répartis selon respectivement la direction longitudinale *D1,D2.*

En référence aux figures 1 à 4, la lame 10 s'étend transversalement d'une zone avant 14 à proximité du bord d'attaque 20 de la pale 1 vers une zone arrière 15 à proximité du bord de fuite 30 de la pale 1. Le premier moyen de fixation 11 fixe la zone avant 14 à l'une des peaux 2',2" alors que le second moyen de fixation 14 fixe la zone arrière 15 à l'autre peau 2",2'. Ainsi, chaque peau 2',2" est respectivement fixé à un seul moyen de fixation 11,12.

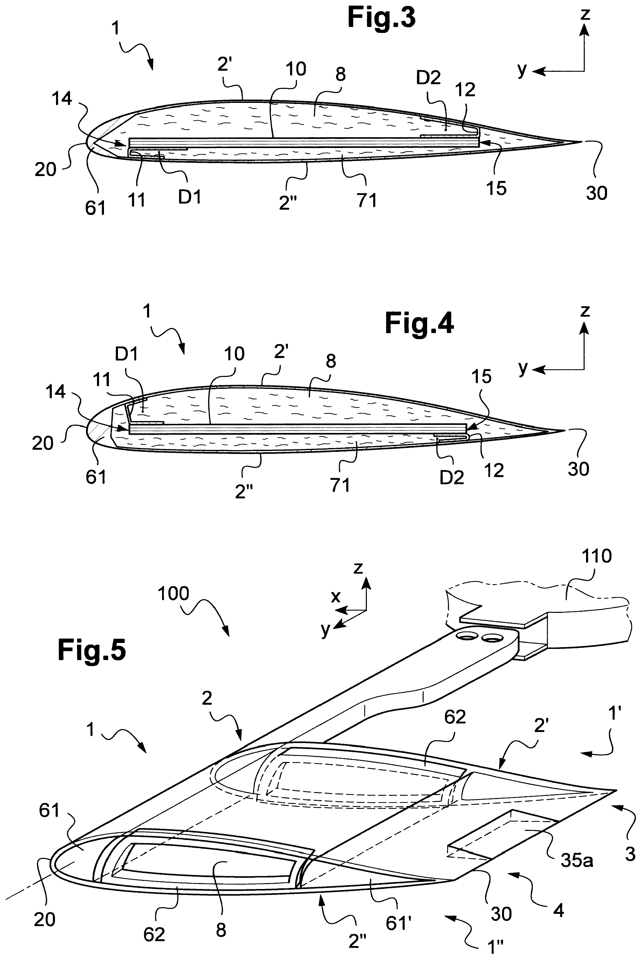

En référence à la figure 3, selon le premier mode de réalisation de l'invention, le premier moyen de fixation 11 solidarise la zone avant 14 à la peau d'intrados 2", le second moyen de fixation 12 solidarisant la zone arrière 15 à la peau d'extrados 2'.

En référence à la figure 4, selon une seconde variante de ce premier mode de réalisation, le premier moyen de fixation 11 solidarise la zone avant 14 à la peau d'extrados 2', le second moyen de fixation 12 solidarisant la zone arrière 15 à la peau d'intrados 2".

Par ailleurs, la lame 10 est réalisée à l'aide d'un matériau composite anisotrope. De fait, une traction de la lame 10, sous l'effet d'une force centrifuge F, suivant la direction de référence Y selon laquelle s'étend la lame 10 génère alors un vrillage de cette lame 10. De même, une compression de la lame 10 entraîne un vrillage inverse, de même qu'une diminution d'une traction donnée.

En outre, pour obtenir un caractère anisotrope optimisé, la lame 10 comporte un empilement de plis unidirectionnels, chaque pli comportant des fibres résistantes dirigées parallèlement à une direction donnée, ces fibres étant noyées dans une matrice de type résine par exemple dont la résistance mécanique est plus faible.

De plus, l'empilement 13 comporte un pli médian 17 s'étendant selon la direction de référence Y parallèle à l'axe de variation de pas *AY de* la pale 10. Ce pli médian 17 comprend par exemple des fibres dirigées parallèlement à la direction longitudinale Y pour transmettre la force centrifuge F au moyeu 110. Par définition, on considère que le pli médian 17 comprend des fibres à 0° par rapport à la direction longitudinale Y.

La pale 1 selon ce premier mode de réalisation forme ainsi une pale à vrillage adaptatif, c'est-à-dire qu'elle peut se vriller en cours de vol consécutivement au vrillage de la lame 10 sous l'effet de forces centrifuges.

Spécifiquement au second mode de réalisation de l'invention et selon la figure 5, le premier longeron 61 saille de la première zone extrémale 3 du revêtement extérieur 2 pour être fixée au moyeu 110. Comme pour le premier mode de réalisation, un manchon peut être agencé entre le longeron 61 et le moyeu 110 ou bien le premier longeron 61 peut également être relié à une manchette intégrée à la pale 1, cette manchette intégrée prolongeant le revêtement extérieur 2 pour être fixée au moyeu 110.

En référence aux figures 5 à 7, un second longeron 61' s'étend à l'intérieur de la cavité 8 selon la direction de référence Y et est positionné à proximité du bord de fuite 30 de la pale 1, entre la peau d'extrados 2' et la peau d'intrados 2".

La pale 1 comporte également des nervures 62 transversales s'étendant à l'intérieur de la cavité 8 selon la direction transversale de référence X, parallèle à la corde de la pale 1. Ces nervures 62 s'étendent transversalement du premier longeron 61 vers le second longeron 61' et forment avec les premier et second longerons 61,61' le moyen structurel de ce premier mode de réalisation. Ces nervures 62 sont positionnées entre la peau d'extrados 2' et la peau d'intrados 2". De plus, ces nervures 62 sont ajourées permettant ainsi au matériau de remplissage de remplir la totalité de la cavité 8.

La pale 1 selon ce second mode de réalisation forme une pale traditionnelle répondant à une loi de vrillage et dont le vrillage est obtenu par construction et figé.

Les premier et second longerons 61,61' constituent avec les nervures 62 le moyen structurel de la pale 1 selon le second mode de réalisation de l'invention, alors que ce moyen structurel selon le premier mode de réalisation est formé par la lame 10, les premier et second moyens de fixation 11,12 et le premier longeron 61.

Quel que soit le mode de réalisation de l'invention, ce moyen structurel définit avec le revêtement extérieur 2 les principales caractéristiques mécaniques de la pale 1. De plus, le matériau de remplissage inséré dans la cavité 8 permet d'apporter une rigidité en compression vis-à-vis du flux d'air appliqué sur le revêtement extérieur 2 de la pale 1 ainsi qu'une rigidité en torsion autour de la direction longitudinale Y. Par contre, cette rigidité en torsion peut être préjudiciable aux bonnes performances de la pale 1.

Selon le premier mode de réalisation de l'invention qui est une pale à vrillage adaptatif, cette rigidité en torsion peut s'opposer au vrillage de la pale sous l'effet des forces aérodynamiques et ainsi être préjudiciable aux bonnes performances aérodynamiques de cette pale 1.

Selon le second mode de réalisation de l'invention qui est une pale traditionnelle, cette rigidité en torsion peut être notamment à l'origine de l'apparition de vibrations importantes au niveau de la pale 1 et du rotor 100.

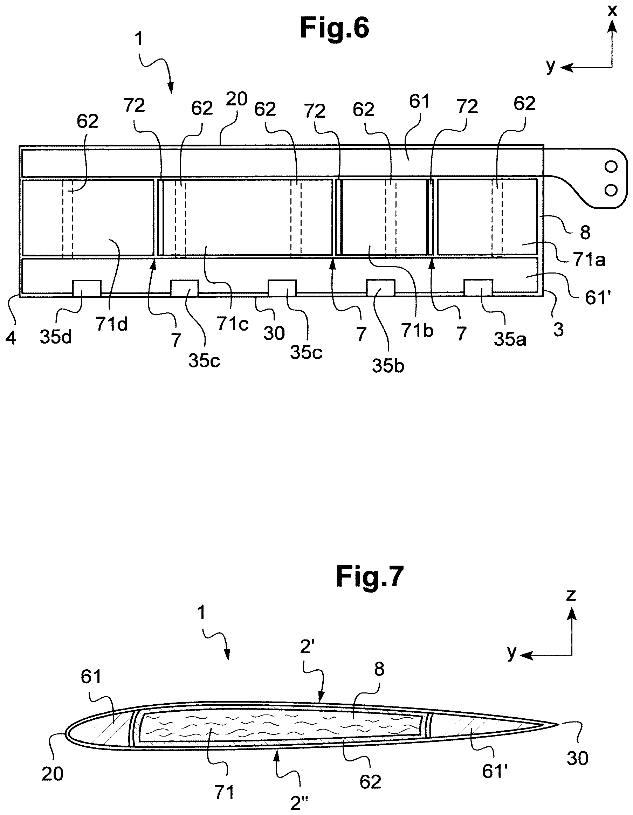

De plus, la pale 1 selon l'invention, que ce soit pour le premier mode de réalisation selon la figure 2 ou bien le second mode de réalisation selon la figure 6, comporte plusieurs séparations 7 transversales, qui sont parallèles à la corde de la pale 1 et divisent le matériau de remplissage agencé à l'intérieur de la cavité 8 en plusieurs blocs 71 indépendants. La présence de ces séparations 7 transversales permet de réduire la rigidité en torsion de la pale 1 autour de la direction longitudinale Y, sans que ses autres caractéristiques mécaniques soient modifiées.

En effet, la cavité 8 de la pale 1 comporte alors plusieurs blocs 71 indépendants en matériau de remplissage. De fait, ces blocs 71 ne se transmettent pas de couple de torsion autour de la direction longitudinale Y. Par suite, les contraintes de cisaillement présentent dans la pale 1 dues à ce couple de torsion sont alors réduites.

De plus, le nombre de séparations 7 a un effet direct sur la réduction de la rigidité en torsion de la pale 1. Par exemple, la pale 1 selon le premier mode de réalisation de l'invention représenté sur la figure 2 comporte un grand nombre de séparations 7 réparties sur l'ensemble de l'envergure de la pale 1, une multitude de blocs 71 en matériau de remplissage étant agencée dans la cavité 8. De fait, la rigidité en torsion autour de la direction longitudinale Y de cette pale 1 est notablement réduite. Cette réduction de la rigidité en torsion de la pale 1 est particulièrement intéressante pour la pale 1 selon ce premier mode de réalisation, permettant ainsi de favoriser l'adaptation au vrillage de cette pale 1 au cours d'un vol.

Par contre, la pale 1 selon le second mode de réalisation de l'invention représenté sur la figure 6 comporte trois séparations 7, quatre blocs 71a,71b,71c,71d en matériau de remplissage étant agencés dans la cavité 8. Ces trois séparations 7 permettent ainsi d'avoir une légère diminution de la rigidité en torsion de cette pale 1 autour de la direction longitudinal Y. Par suite, les vibrations pouvant être générées au niveau de la pale 1 sont réduites et le fonctionnement de la pale 1 est ainsi amélioré par la présence de ces séparations 7.

Il est également possible, pour obtenir des rigidités en torsion différentes suivant les zones de la pale 1 en envergure, d'utiliser des matériaux de remplissage de caractéristiques différentes. Par exemple, dans le cas du second mode de réalisation de l'invention, en référence à la figure 6, les quatre blocs 71a,71b,71c,71d en matériau de remplissage sont formés par des mousses de rigidités et densités différentes. Ainsi, le bloc 71a, situé en pied de pale, peut avoir une rigidité en torsion importante, les autres blocs 71b,71c,71d étant plus souple et moins dense jusqu'à l'extrémité libre de la pale 1. De fait, le bloc 71d, situé à l'extrémité libre de la pale 1, est le bloc le plus souple et le moins dense.

En outre, des moyens de vrillage actif peuvent être ajoutés à la pale 1 aussi bien pour le premier mode de réalisation que pour le second mode de réalisation de l'invention. Par exemple, selon les figures 5 et 6, des volets mobiles 31 sont ajoutés au niveau de bord de fuite 30 de la pale 1 selon le second mode de réalisation de l'invention. Notamment suivant la figure 6, au moins un volet mobile 31a,31b,31c,31d se trouve en vis-à-vis de chaque bloc 71a,71b,71c,71d en matériau de remplissage.

Grâce à ces volets mobiles 31, le vrillage de la pale 1 peut être modifié de manière active, c'est-à-dire au cours du vol de l'aéronef. Ce vrillage actif de la pale 1 est de plus favorisé par la présence de séparations 7 dans le matériau de remplissage. Ces volets mobiles 31 peuvent également être positionnés dans le prolongement du bord de fuite de la pale 1.

En outre, des micro-déplacements peuvent se produire entre deux blocs 71 en matériau de remplissage adjacents, au niveau de chaque séparation 7. Par suite, afin que ces blocs 71 en matériau de remplissage ne s'usent pas suite aux frottements consécutifs à ces micro-déplacements, une interface 72 à base de matériau à faible coefficient de frottement ou de matériau anti-adhérant, tel que du téflon^{®}, est insérée au niveau de chaque séparation 7 entre deux blocs 71 adjacents.

Selon la figure 6, cette interface 72 est constituée par une bande insérée dans chaque séparation et fixée à un bloc 71, par exemple par collage. Cette bande, de préférence de faible épaisseur, peut être constituée entièrement par un tel matériau à faible coefficient de frottement ou bien posséder uniquement un dépôt surfacique d'un tel matériau sur la face de cette bande opposée au bloc 71 sur lequel cette bande est fixée.

Selon la figure 2, cette interface 72 est constituée par deux bandes insérées dans chaque séparation 7, une bande étant fixée respectivement sur chacun de ces deux blocs 71 adjacents, par exemple par collage. Chaque bande peut être constituée entièrement par un tel matériau à faible coefficient de frottement ou bien posséder uniquement un dépôt surfacique d'un tel matériau sur la face de cette bande opposée au bloc 71 sur lequel cette bande est fixée.

Outre une pale 1, l'invention a aussi pour objet un rotor 100 d'aéronef, ce rotor 100 étant muni d'un moyeu 110 et d'une pluralité de pales 1. Chaque pale 1 de ce rotor 100 est une pale 1 à rigidité en torsion réduite telle que décrite précédemment.

Ce rotor 100 peut notamment constituer une hélice d'un aéronef ou encore un rotor d'un aéronef à voilure tournante, en particulier un rotor arrière de cet aéronef à voilure tournante.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) de rotor à rigidité en torsion réduite comportant :
- un revêtement extérieur (2) s'étendant selon un axe de variation de pas (*AY*) d'une première zone extrémale (3) à une seconde zone extrémale (4), ledit revêtement extérieur (2) comportant une peau d'extrados (2') et une peau d'intrados (2"),
- un moyen structurel apte à relier ladite pale (1) à un moyeu (110) dudit rotor (100), et
- une cavité (8) délimitée par ledit revêtement extérieur (2), ladite cavité (8) étant remplie d'un matériau de remplissage,
dont ledit matériau de remplissage comporte au moins une séparation (7) parallèlement à une corde de ladite pale (1), au moins deux blocs (71) indépendants en matériau de remplissage remplissant ladite cavité (8) selon l'envergure de ladite pale (1), **caractérisé en ce que** une bande (72) est insérée dans chaque séparation (7) et fixée à un bloc (71) afin de séparer deux blocs (71) adjacents.

2. Pale (1) selon la revendication 1,
**caractérisée en ce que** chaque bande (72) est constituée d'un matériau anti-adhérant.

3. Pale (1) selon l'une quelconque des revendications 1 à 2,
**caractérisée en ce que** ledit matériau de remplissage est une mousse.

4. Pale (1) selon l'une quelconque des revendications 1 à 3, **caractérisée en ce que** ledit moyen structurel comporte au moins un longeron (61) s'étendant à l'intérieur de ladite cavité (8) selon ledit axe de variation de pas (*AY*) et liant ladite peau d'extrados (2') et ladite peau d'intrados (2").

5. Pale (1) selon l'une quelconque des revendications 1 à 4,
**caractérisée en ce que** ledit moyen structurel comporte une lame (10) s'étendant à l'intérieur de ladite cavité (8) selon ledit axe de variation de pas (*AY*), ladite lame (10) comportant un matériau composite anisotrope pour être apte à se vriller sous l'effet de forces centrifuges (F) lorsque ladite pale (1) est en rotation, ladite lame (10) étant fixée audit revêtement extérieur (2) par un premier moyen de fixation (11) et un second moyen de fixation (12) pour pouvoir vriller ledit revêtement extérieur (2).

6. Pale selon la revendication 5,
**caractérisée en ce que** ladite lame (10) comporte un empilement (13) de plis composites unidirectionnels antisymétriques par rapport à un pli médian (17).

7. Pale selon l'une quelconque des revendications 5 à 6,
**caractérisée en ce que** ladite lame (10) comportant une zone avant (14) à proximité du bord d'attaque (20) de ladite pale (1) et une zone arrière (15) à proximité du bord de fuite (30) de ladite pale (1), ledit premier moyen de fixation (11) fixe la zone avant (14) à l'une desdites peaux (2',2") et le second moyen de fixation (14) fixe la zone arrière (15) à l'autre peau (2",2'), ledit premier moyen de fixation (11) s'étendant dans la cavité (8) selon une première direction longitudinale (*D1*) parallèle audit axe de variation de pas (*AY*), le second moyen de fixation (12) s'étendant dans la cavité (8) selon une seconde direction longitudinale (*D2*) parallèle audit axe de variation de pas (*AY*)*.*

8. Pale selon l'une quelconque des revendications 1 à 7,
**caractérisée en ce que** des moyens de vrillage actif (31) sont ajoutés à ladite pale (1).

9. Pale selon l'une quelconque des revendications 1 à 8,
**caractérisée en ce que** lesdits blocs (71) ont des caractéristiques différentes afin d'obtenir des rigidités en torsion différentes suivant chaque zone de ladite pale (1) en envergure.

10. Rotor (100) d'un aéronef, ledit rotor (100) étant muni d'un moyeu (110) et d'une pluralité de pales (1),
**caractérisé en ce qu'**au moins une pale (1) est selon l'une quelconque des revendications 1 à 9.

11. Rotor (100) selon la revendication 10,
**caractérisé en ce que** ledit rotor (100) constitue un rotor arrière d'un aéronef à voilure tournante.

## Patentansprüche

1. Rotorblatt (1) mit verminderter Torsionssteifigkeit, welches aufweist:
- eine Außenhaut (2), die sich entlang einer Anstellwinkelveränderungsachse (AY) von einem ersten Endbereich (3) zu einem zweiten Endbereich (4) erstreckt, wobei die Außenhaut (2) eine saugseitige Haut (2') und eine druckseitige Haut (2") aufweist,
- ein Bauteil, das das Rotorblatt (1) mit einer Nabe (110) des Rotors (100) verbinden kann, und
- einen Hohlraum (8), der von der Außenhaut (2) umgrenzt wird, wobei der Hohlraum (8) mit einem Füllmaterial gefüllt ist, wobei das Füllmaterial mindestens eine Trennung (7) parallel zu einer Sehne des Rotorblatts (1) aufweist, wobei mindestens zwei unabhängige Blöcke (71) aus Füllmaterial den Hohlraum (8) entlang der Spannweite des Rotorblatts (1) füllen,
**dadurch gekennzeichnet, dass** ein Band (72) in jede Trennung (7) eingefügt und an einem Block (71) befestigt ist, um zwei benachbarte Blocks (71) zu trennen.

2. Rotorblatt (1) nach Anspruch 1,
**dadurch gekennzeichnet, dass** jedes Band aus einem Material mit Antihaftwirkung besteht.

3. Rotorblatt (1) nach einem der Ansprüche 1 bis 2,
**dadurch gekennzeichnet, dass** das Füllmaterial ein Schaum ist.

4. Rotorblatt (1) nach einem der Ansprüche 1 bis 3,
**dadurch gekennzeichnet, dass** das Bauteil mindestens einen Längsträger (61) aufweist, der sich im Inneren des Hohlraums (8) entlang der Anstellwinkelveränderungsachse (AY) erstreckt und die saugseitige Haut (2') mit der druckseitigen Haut (2") verbindet.

5. Rotorblatt (1) nach einem der Ansprüche 1 bis 4,
**dadurch gekennzeichnet, dass** das Bauteil eine Platte (10) aufweist, die sich im Inneren des Hohlraums (8) entlang der Anstellwinkelveränderungsachse (AY) erstreckt, wobei die Platte (10) ein anisotropes Verbundmaterial aufweist, um sich unter Einwirkung von Zentrifugalkräften (F) verdrehen zu können, wenn das Rotorblatt (1) sich dreht, wobei die Platte (10) an der Außenhaut (2) über ein erstes Befestigungsmittel (11) und ein zweites Befestigungsmittel (12) befestigt ist, um die Außenhaut (2) verdrehen zu können.

6. Rotorblatt nach Anspruch 5,
**dadurch gekennzeichnet, dass** die Platte (10) eine Aufeinanderschichtung (13) gleichgerichteter Verbundstofflagen aufweist, die asymmetrisch bezüglich einer Mittelstofflage (17) sind.

7. Rotorblatt nach einem der Ansprüche 5 bis 6,
**dadurch gekennzeichnet, dass** die Platte (10) einen vorderen Bereich (14) in der Nähe der Vorderkante (20) des Rotorblatts (1) und einen hinteren Bereich (15) in der Nähe der Hinterkante (30) des Rotorblatts (1) aufweist, wobei das erste Befestigungsmittel (11) den vorderen Bereich (14) an einer der Häute (2', 2"), und das zweite Befestigungsmittel (14) den hinteren Bereich (15) an der anderen Haut (2", 2') befestigt, wobei sich das erste Befestigungsmittel (11) in dem Hohlraum (8) entlang einer ersten Längsrichtung (D1) erstreckt, die parallel zu der Anstellwinkelveränderungsachse (AY) verläuft, wobei das zweite Befestigungsmittel (12) sich in den Hohlraum (8) entlang einer zweiten Längsrichtung (D2) erstreckt, die parallel zu der Anstellwinkelveränderungsachse (AY) verläuft.

8. Rotorblatt nach einem der Ansprüche 1 bis 7,
**dadurch gekennzeichnet, dass** aktive Verdrehmittel (31) dem Rotorblatt (1) beigefügt sind.

9. Rotorblatt nach einem der Ansprüche 1 bis 8,
**dadurch gekennzeichnet, dass** die Blöcke (71) verschiedene Eigenschaften aufweisen, um verschiedene Torsionssteifigkeiten gemäß jedem Bereich des Rotorblatts (1) in Spannweitenrichtung zu erhalten.

10. Rotor (100) eines Luftfahrzeugs, wobei der Rotor (100) mit einer Nabe (110) und einer Mehrzahl von Rotorblättern (1) versehen ist, **dadurch gekennzeichnet, dass** mindestens ein Rotorblatt (1) gemäß einem der Ansprüche 1 bis 9 ausgebildet ist.

11. Rotor (100) nach Anspruch 10,
**dadurch gekennzeichnet, dass** der Rotor (100) einen hinteren Rotor eines Drehflügelflugzeugs bildet.

## Claims

1. A rotor blade (1) with reduced torsional rigidity, comprising:
- an outer covering (2) extending along a feathering axis (AY) from a first end zone (3) to a second end zone (4), said outer covering (2) comprising an upper surface skin (2') and a lower surface skin (2"),
- a structural means capable of connecting said blade (1) to a hub (110) of said rotor (100), and
- a cavity (8) defined by said outer covering (2), said cavity (8) being filled with a filling material,
of which said filling material comprises at least one partition (7) parallel to a chord of said blade (1), at least two independent blocks (71) of filling material filling said cavity (8) along the span of said blade (1), **characterised in that** a strip (72) is inserted into each partition (7) and is fastened to a block (71) so as to separate two adjacent blocks (71).

2. A blade (1) according to Claim 1,
**characterised in that** each strip (72) is formed of a non-stick material.

3. A blade (1) according to any one of Claims 1 to 2,
**characterised in that** said filling material is a foam.

4. A blade (1) according to any one of Claims 1 to 3,
**characterised in that** said structural means comprises at least one spar (61) extending within said cavity (8) along said feathering axis (AY) and connecting said upper surface skin (2') and said lower surface skin (2").

5. A blade (1) according to any one of Claims 1 to 4,
**characterised in that** said structural means comprises a leaf (10) extending within said cavity (8) along said feathering axis (AY), said leaf (10) comprising an anisotropic composite material in order to be capable of twisting under the effect of centrifugal forces (F) when said blade (1) is rotating, said leaf (10) being fastened to said outer covering (2) by a first fastening means (11) and a second fastening means (12) in order to be able to twist said outer covering (2).

6. A blade according to Claim 5,
**characterised in that** said leaf (10) comprises a stack (13) of unidirectional composite layers which are anti-symmetrical relative to a median layer (17).

7. A blade according to any one of Claims 5 to 6,
**characterised in that**, said leaf (10) comprising a forward zone (14) in proximity to the leading edge (20) of said blade (1) and a rear zone (15) in proximity to the trailing edge (30) of said blade (1), said first fastening means (11) fixes the forward zone (14) to one of said skins (2', 2") and the second fastening means (14) fixes the rear zone (15) to the other skin (2", 2'), said first fastening means (11) extending within the cavity (8) in a first longitudinal direction (D1) parallel to said feathering axis (AY), the second fastening means (12) extending within the cavity (8) in a second longitudinal direction (D2) parallel to said feathering axis (AY).

8. A blade according to any one of Claims 1 to 7,
**characterised in that** active twisting means (31) are added to said blade (1).

9. A blade according to any one of Claims 1 to 8,
**characterised in that** said blocks (71) have different characteristics in order to obtain different torsional rigidities according to each span-wise zone of said blade (1).

10. A rotor (100) of an aircraft, said rotor (100) being provided with a hub (110) and a plurality of blades (1),
**characterised in that** at least one blade (1) is in accordance with any one of Claims 1 to 9.

11. A rotor (100) according to Claim 10,
**characterised in that** said rotor (100) constitutes a tail rotor of a rotary-wing aircraft.
